# EUROPEAN PATENT APPLICATION

(11) **EP 1 300 375 A1**
(43) Date of publication of application: **09.04.2003**
(21) Application number: 01934332.6
(22) Date of filing: 23.05.2001
(51) Int. Cl.: C04B 28/00, C04B 38/06, C04B 16/04

(54) **THERMOPLASTIC HYDRAULIC COMPOSITION, FORMED PRODUCT PREPARED FROM THE COMPOSITION BY HARDENING THROUGH HYDRATION THEREOF, AND METHOD FOR PREPARING THE FORMED PRODUCT**

(30) Priority: 25.05.2000 JP 2000155094
(71) Applicant: SUMITOMO OSAKA CEMENT CO., LTD., Tokyo 102-8465 (JP)
(72) Inventor: UCHIDA, Kiyohiko SUMITOMO OSAKA CEMENT CO., Ltd., Funabashi-shi Chiba 274-8601 (JP); USHIODA, Hiroo SUMITOMO OSAKA CEMENT CO., LTD., Funabashi-shi, Chiba 274-8601 (JP); OZAWA, Satoshi SUMITOMO OSAKA CEMENT CO., LTD., Funabashi-shi, Chiba 274-8601 (JP); SHIMADA, Yasuhiko SUMITOMO OSAKA CEMENT CO., Ltd., Funabashi-shi, Chiba 274-8601 (JP); EDAMURA, Atsushi SUMITOMO OSAKA CEMENT CO., Ltd., Funabashi-shi, Chiba 274-8601 (JP); KOZAKAI, Noriyuki SUMITOMO OSAKA CEMENT CO., Ltd., Chiyoda-ku, Tokyo 101-8677 (JP); OKAMURA, Tatsuya SUMITOMO OSAKA CEMENT CO., LTD.,, Chiyoda-ku, Tokyo 101-8677 (JP); MIKAMI, Koji SUMITOMO OSAKA CEMENT CO., LTD.,, Chiyoda-ku, Tokyo 101-8677 (JP)
(74) Representative: Behnisch, Werner, Dr.
(86) International application number: JP0104356
(87) International publication number: WO01090021

(57) **Abstract**

The object of the present invention is to produce general machine parts, OA machine part, and the like which can be produced by injection molding and which have excellent mechanical properties, thermal resistance, dimension stability and processability. The thermoplastic hydraulic composition of the present invention comprises 100 parts by weight of two types of thermoplastic resins differing in melting point and from 500 to 1000 parts by weight of a hydraulic composition. It is characterized by further comprising from 1 to 200 parts by weight of a fiber and/or from 0.5 to 10.0 parts by weight of a releasing agent added. It is characterized in that the hydraulic composition preferably is a mixed powder which comprises from 50 to 90 wt % of a hydraulic powder and from 10 to 50 wt % of a non-hydraulic powder having an average particle diameter of 1/10 that of the hydraulic powder or less.

## Description

### TECHNICAL FIELD

The present invention relates to a thermoplastic hydraulic composition that allows an injection molding technique mainly employed for production of plastic molded articles and ceramic molded articles to be applicable even for hydraulic compositions, and to formed articles prepared from the hydraulic compositions by hydration-hardening.

The present invention relates more particularly to provide thermoplastic hydraulic compositions, formed articles thereof having excellent mechanical properties, thermal resistance, dimensional stability and processability, as well as being capable of being applied for, e.g., general machine parts and OA machine parts.

### BACKGROUND ART

As a material for machine parts, metallic materials have conventionally been used widely due to their superior material characteristics. However, a recent technical progress has diversified needs for machine parts and machine parts in which non-metallic materials such as sintered ceramics or plastics have come to be used for making up for drawbacks of metallic materials

The present inventors made a variety of investigations in order to comply with such demands and found that a hydraulic composition comprising a combination of a hydraulic powder, a non-hydraulic powder with an average particle diameter at least one order smaller than that of the hydraulic powder, a workability improver and a formability improver can be applied for machine parts such as paper sheet-feeding rollers through its pressure forming or extrusion forming; they filed patent applications directed thereto (Japanese Patent Application Nos. Hei-10-177099, Hei-10-177100 and Hei-11-233636.)

However, these hydraulic compositions and methods for forming the same can be easily applied for machine parts of simple shapes but are difficult to be applied for machine parts of complex shapes. The fact of being restricted in shape which can be produced problematically results directly in the restriction on the application range of the hydraulic compositions.

### DISCLOSURE OF THE INVENTION

The object of the present invention is to provide a thermoplastic hydraulic composition and a formed article prepared from the composition by hydration-hardening that make it possible to produce machine parts with a shape more complex than those obtained by conventional pressing or extrusion forming by allowing the above-mentioned hydraulic composition for machine parts to have a composition such that the resulting hydraulic composition can be injection molded and forming it.

The present inventors made intensive studies to achieve the above object and found that a thermoplastic hydraulic composition containing a thermoplastic resin, a hydraulic powder, a fiber and a releasing agent respectively in given amounts is of excellent injection moldability and that a molded article obtained by injection molding the thermoplastic hydraulic composition and hardening it by curing is excellent in mechanical properties, thermal properties and formability, thus achieving reproduction of a complex shape.

Specifically, the thermoplastic hydraulic composition of the present invention is characterized by containing 100 parts by weight of two types of thermoplastic resins differing in melting point and from 500 to 1000 parts by weight of a hydraulic composition, and is preferably characterized by further comprising from 1 to 200 parts by weight of a fiber and/or from 0.5 to 10.0 parts by weight of a releasing agent added.

The foregoing hydraulic composition is preferably a mixed powder comprising from 50 to 90 wt % of a hydraulic powder and from 10 to 50 wt % of a non-hydraulic powder.

### BEST MODE FOR CARRYING OUT OF THE INVENTION

A more detailed description on the thermoplastic hydraulic composition of the present invention will be made below.

### (1) Hydraulic composition

(1-1) In the thermoplastic hydraulic composition of the present invention, it is preferable that the hydraulic composition is used in an amount of from 500 to 1000 parts by weight, particularly from 650 to 750 parts by weight, based on 100 parts by weight of the two types of thermoplastic resins differing in melting point. If less than 500 parts by weight, the strength of formed articles will be reduced, whereas when exceeding 1000 parts by weight, the amount of the thermoplastic resin incorporated will be reduced, resulting in deterioration of formability to cause a problem.
   By the hydraulic composition is meant a powder that is hardened by water and preferably comprises at least one powder selected from portland cement, calcium silicate, calcium aluminate, calcium fluoroaluminate, calcium sulphoaluminate, calcium aluminoferrite, calcium phosphate, hemihydrate or anhydride gypsum, and a powder of calcium oxide possessing a self-hardening property.
   The hydraulic powder preferably has an average particle diameter of from about 10 to about 40 µm, and preferably has a specific surface area by blaine of 2500 cm²/g or more from the viewpoint of securing a high strength of formed articles,
(1-2) The aforementioned hydraulic composition preferably is a mixed powder comprising from 50 to 90 wt% of a hydraulic powder and from 10 to 50 wt% of a non-hydraulic powder having an average particle diameter *of* 1/10 that of the hydraulic powder or less.
   The aforementioned non-hydraulic powder indicates a powder that is incapable of hardening by itself even by its contact with water and includes a powder such that some of the components thereof are eluted in an alkaline or acid state or under a high-pressure steam atmosphere and then react with other eluted components to form a product. Preferred as the non-hydraulic powder is at least one powder selected from a calcium hydroxide powder, a dihydrate gypsum powder, a calcium carbonate powder, a slag powder, a fly ash powder, a silica powder, a clay powder and a silica fume powder. The non-hydraulic powder has an average particle diameter at least one order, preferably at least two order, smaller than that of the hydraulic powder, but no lower limit is set unless the effect of the present invention is damaged.
(2) The thermoplastic resin is a resin which can obtain a plasticity to a degree such that it can be formed by heating and is a resin which can be used for extrusion forming and injection molding. In the present invention, a hydraulic composition is melt kneaded together with the thermoplastic resin at a temperature not lower than the softening point of the thermoplastic resin to be formed into a pellet form, which is used as a raw material for the subsequent injection molding.
   The pellet-formed raw material is melted and kneaded again within a heating cylinder mounted inside an injection molding machine and is filled into a mold by the injection device. The mixture of the hydraulic composition and the thermoplastic resin filled into the mold is formed into a formed article through cooling and hardening of the thermoplastic resin, which can be removed from the mold.
   Hydraulic compositions are generally provided with a flowability by water, but it takes a long time for them to be released from a mold. Therefore, forming methods such as injection molding can not be applied for them. Moreover, if the hydraulic compositions come into contact with water, a hydration reaction will proceed and therefore articles defectively formed can not be recycled.
   However, a mixture of the aforementioned thermoplastic resin and the hydraulic composition can afford a shape to the hydraulic composition without use of water and can realize releasing from a mold in a short time. In addition, since no water is used in a stage of forming, no hydration reaction of the hydraulic composition is started and therefore the mixture can be recycled multiple times if it has not been cured yet.
   Since the hydraulic composition of the present invention uses no water during its forming, it is necessary to supply moisture after the forming. The spaces between particles of the hydraulic composition in a formed article after injection molding are filled with a thermoplastic resin. Therefore, if the formed article is left in such a condition, the supply of water to the inside of the formed article will be inhibited, resulting in an insufficient hydration reaction of the formed article.
   For this reason, it is necessary to remove a part or the whole of the resin from the inside of the formed article to form a channel for water supply. When removing the resin from the inside of a formed article, it is desirable to use two types of resins differing in melting point when considering minimizing the dimensional change of the formed article.
   Use of two types of resins differing in melting point makes it possible to injection mold the thermoplastic hydraulic composition and to obtain a formed article with a complex shape because a low molecular resin melts at a relatively low temperature and enables the hydraulic composition to fluidize easily. Such a low molecular resin starts to decompose at a relatively low temperature (about 100°C in the case of some resins), but a high molecular resin starts to decompose at a relatively high temperature (about 200°C in the case of some resins). Accordingly, if the removal of resin components at an intermediate temperature, only the low molecular resin is removed from the inside of the formed article and the vacant spaces resulting from the removal of the low molecular resin becomes channels for moisture supply, which facilitates a hydration reaction in the inside of the formed article. On the other hand, the high molecular resin remaining in the inside of the formed article instead of being decomposed exists in the inside of the formed article to inhibit, e.g., dimensional change of the formed article.
   In addition, when the resin components are removed at a temperature not lower than the melting point of the high molecular resin, all of the low molecular resin and the high molecular resin are removed and a completely inorganic hardened article will be obtained. In such a case, since the low molecular resin has a melting point different than that of the high molecular resin, the low molecular resin is removed first and then the high molecular resin is removed. Such removal of the resin components with a time lag can inhibit dimensional change of formed articles.
   The thermoplastic low molecular compound with a lower melting point preferably has a molecular weight of 200 to several thousands. The thermoplastic high molecular compound with a higher melting point preferably has a molecular weight of 10000 or more. It is desirable to set upper limits based on appropriate selection from the viewpoint of kneadability and the like, because the increase of molecular weight have a great influence to kneadability.
   Regarding blending of the thermoplastic resin, it is preferable to blend a low molecular compound in an amount of from 50 to 90 wt%, as described above, and most preferably from 55 to 65 wt%. The amount of the thermoplastic high molecular compound is preferably from 50 to 10 wt%, and more preferably from 45 to 35 wt%.
   If the amount of the thermoplastic low molecular compound is less than 50 wt%, the channel for moisture supply is reduced and hydration proceeds insufficiently. On the other hand, if it is more than 90 wt%, the dimensional change during removal from a mold will adversely become large.
(2-1) As the aforementioned thermoplastic low molecular compound, it is preferable to use a single substance or two or more substances selected from low melting point compounds including paraffin wax, montan wax, carnauba wax, fatty acid esters, glycerite, and modified wax.
(2-2) As the thermoplastic high molecular compound, used are a single substance or two or more substances of polystyrene, an ethylene-vinyl acetate copolymer, an ethylene-ethyl acrylate copolymer, polypropylene, an acrylonitrile-butadiene-styrene copolymer, an acrylonitrile-styrene copolymer, methyl methacrylate, a vinyl chloride-vinyl chloride acetate copolymer, a vinyl chloride-vinyl acetate-maleic acid copolymer, a vinyl chloride-vinyl acetate copolymer, a vinyl chloride-vinylidene chloride copolymer, a vinyl chloride-acrylonitrile copolymer, an ethylene-vinyl chloride copolymer, a propylene-vinyl chloride copolymer, vinyl acetate, polyvinyl alcohol, polyamide, polyacetal, polyester, polycarbonate, polysulfone, polyether imide, polyamidoimidc, and polyphcnylcne sulfide.
(3) The fiber is preferably added in an amount of from 1 to 200 parts by weight, and more preferably from 100 to 170 parts by weight based on 100 parts by weight of the thermoplastic resin. When no fiber is added or when the amount of fiber added is less than 40 parts by weight, it may be impossible to improve the low impact strength and low tensile strength, which are inherent to hydraulic compositions. If more than 200 parts by weight, it will have much influence to flowability to result in poor formability. As the fiber, fibers of glass, carbon, aramid, polyamidc, boron and the like and potassium titanate whisker can be used. The length of the fiber is preferably from 0.1 to 6 mm, and more preferably from 3 to 6 mm. The diameter of the fiber is preferably from 5 to 30 µm.
(4) The releasing agent is added preferably in an amount of from 0.5 to 10.0 parts by weight, and more preferably in an amount of from 2.0 to 3.0 parts by weight. If less than 0.5 part by weight, the releasability from a mold will be poor. If exceeding 10.0 parts by weight, the hydration reaction of the hydraulic composition may be inhibited. As the releasing agent, stearic acid, stearyl alcohol, ethylene bisstearic acid amide, glycerol triester, glycerol monoester and the like can be used. As other additives, alkylphenols, 2.6-tertialbutylparacresol, bisphenol A and the like for inhibiting oxidation of the thermoplastic resin can be used. In addition, salicylic acid esters, benzene acid esters or the like may optionally be added as an ultraviolet absorber.
(5) Method for producing hardened articles

The hydration-hardened formed article of the present invention is a product produced by forming a thermoplastic hydraulic composition comprising a thermoplastic resin and a hydraulic composition into a given shape to obtain an unhardened formed article, subsequently heating it at a temperature not lower than the melting point of the thermoplastic resin to remove the thermoplastic resin from the inside of the formed article (this operation is also called degreaeing), and curing the resulting formed article to introduce moisture, thereby hydration-hardening the formed article. The thermoplastic resin may be made up of one compound, but it is preferable to use one made up of two types of substances including a thermoplastic low molecular compound and a thermoplastic high molecular compound as described previously.

When the thermoplastic resin is constituted of such two types of compounds, preferred is degreasing at a temperature between the melting point of the thermoplastic low molecular compound having a lower melting point and the melting point of the thermoplastic high molecular compound having a higher melting point (270°C or less). This will remove only the thermoplastic low molecular compound from the inside of a formed article. Introduction of moisture using the vacant spaces resulting from the degreasing as channels for moisture supply will increase the hydration reaction rate to cause hydration hardening.

Specifically, injection molding, extrusion forming, pressure forming and the like can be employed as a forming method. Furthermore, regarding a degreasing method, when DEP and an ethylene-vinyl acetate copolymer are used as a low molecular compound and a high molecular compound, respectively, decomposition of DEP starts at 100°C and ends at 190°C; whereas the ethylene-vinyl acetate copolymer starts to decompose at 210°C. Accordingly, it is possible to selectively remove only DEP by heating formed articles at 200°C.

When curing at a temperature of from 400 to 500°C, it is possible to remove these thermoplastic resins completely.

The time required for resin removal can be set optionally depending, for example, on the kind, incorporation amount, pressure and temperature of the resin. When the combination of the resins described in the above example is degreased at 200°C under atmospheric pressure, the degreasing ratio will reach about 70% in 3 hours and about 100% in 12 hours. Further, curing may be carried out by a curing method such as a normal pressure steam curing, a high pressure steam curing and a hot water curing conducted alone at a temperature not lower than 80°C, or in combination of the high pressure steam curing and the hot water curing.

As a degreasing method, methods other than heating can be applied and are exemplified by solvent extraction and a removal method using reduced pressure.

The following is a description on embodiments of the present invention.

### < Experimental Example 1>

A thermoplastic hydraulic composition was prepared by blending an ethylene-vinyl acetate copolymer resin (EVA, molecular weight: 30000 to 50000) as a thermoplastic high molecular compound, carnauba wax (molecular weight: 300 to 500) as a thermoplastic low molecular compound and stesric acid as a releasing agent, respectively in the ratios given in Table 1, to a powder resulting from mixing of portland cement (average particle diameter 20 µm) as a hydraulic powder and fly ash and silica powder as non-hydraulic powders, and then was kneaded with a hot roll at 140°C for 45 minutes to yield pellets. Subsequently, an injection molded article 120 mm long, 10 mm wide and 3 mm thick was obtained by use of the pellets. The resulting unhardened molded article was degreased through a degreasing step by heating ( 1): at 200°C for 12 hours, 2) at 500°C for 12 hours) and then a molded article was produced by autoclave curing (175°C, 7 hours, 8.8 atm). The molded article was tested for its flexural strength, deflection temperature under load, and coefficient of linear expansion and was compared. The results are shown in Table 1.

### <Test Method>

### HDT Test (Test of Deflection Temperature under Load) According to JIS K 7191-2, Method A

A specimen 120 mm long, 10 mm wide and 3 mm thick was prepared. The specimen was held between supporting points with an interval of 100 mm and the temperature thereof was raised at a constant rate while a flexural stress of 1.8 MPa was applied downward to its center. The temperature at which the deflection reached a standard deflection was used as the deflection temperature under load. Coefficient of linear expansion ···· According to ASTM D-648

A φ3 x 20 mm specimen was prepared and the coefficient of linear expansion was measured in the temperature range of from 30 to 80°C using a push-rod type measuring device.

**Table 1**

| | | | | | | | |
|---|---|---|---|---|---|---|---|
| Unit: part(s) by weight | | | | | | | |

| | Example 1 | Example 2 | Example 3 | Example 4 | Example 5 | Comparative Example 1 | Comparative Example 2 |
|---|---|---|---|---|---|---|---|
| Portland cement | 80 | 80 | 80 | 80 | 80 | 80 | 80 |
| Fly ash (average particle diameter 1 to 2 µm) | 10 | 10 | 10 | 10 | 10 | 10 | 10 |
| Silica powder | 10 | 10 | 10 | 10 | 10 | 10 | 10 |
| Carnauba wax | 7.5 | 8.5 | 7.5 | 8.5 | 4.0 | 9.0 | 0 |
| Ethylene-vinyl acetate copolymer | 3.6 | 3.6 | 3.6 | 3.6 | 6.0 | 0 | 9.0 |
| Stearic acid | 0.2 | 0.2 | 0.2 | 0.2 | 0.2 | 0.2 | 0.2 |
| Carbon fiber | 2.0 | 2.0 | 2.0 | 2.0 | 2.0 | 2.0 | 2.0 |
| Degreasing method | (1) | (1) | (2) | (2) | (1) | (1) | (1) |
| Flexural strength* (N/mm²) | 37.0 | 40.4 | 105 | 110 | 22.6 | ** | 8.6 |
| HDT(°C) | 180 | 178 | >280 | >280 | 95 | ** | 50 |
| Coefficient of linear expansion (×10⁻⁷) | 80 | 80 | 38 | 39 | 150 | ** | 250 |

| | | | | | | | |
|---|---|---|---|---|---|---|---|
| * According to JIS K 7171 Bending test | | | | | | | |
| ** Cracks were formed during curing. | | | | | | | |

The results shown above reveal that all the molded articles of the present invention are superior in mechanical strength in terms of flexural strength to those of the Comparative Examples. In addition, it is shown that the molded articles of the present invention have higher deflection temperatures under load and therefore are superior also in thermal resistance. Moreover, the fact that the molded articles of the present invention have smaller coefficients of linear expansion shows that those molded articles are superior also in dimension stability. On the other hand, the molded articles of Comparative Examples are inferior in all of these properties to those of the present invention. In Comparative Example 2, cracks were formed during curing.

### <Experimental Example 2>

Using the same materials as those used in Experimental Example 1, a thermoplastic hydraulic composition with the composition shown in Table 2 was kneaded while being heated to 150°C with a hot roll and formed into a pellet form. Subsequently, the resultant was formed into a 120 mm long, 10 mm wide, 3 mm thick specimen using an injection machine and then the unhardened molded article was degreased through a degreasing step by heating ((1): at 200°C for 12 hours, (2) at 500°C for 12 hours). A molded article thereafter was produced by normal pressure steam curing (100°C, 7 hours) and then compared its flexural strength, deflection temperature under load, and coefficient of linear expansion in the same way as Experimental Example 1. The results are shown in Table 2.

**TABLE 2**

| | | | | | | | |
|---|---|---|---|---|---|---|---|
| Unit: part(s) by weight | | | | | | | |

| | Example 6 | Example 7 | Example 8 | Example 9 | Example 10 | Comparative Example 3 | Comparative Example 4 |
|---|---|---|---|---|---|---|---|
| Portland cement | 80 | 80 | 80 | 80 | 80 | 80 | 80 |
| Fly ash (average particle diameter 1 to 2 µm) | 10 | 10 | 10 | 10 | 10 | 10 | 10 |
| Silica powder | 10 | 10 | 10 | 10 | 10 | 10 | 10 |
| Carnauba wax | 7.5 | 8.5 | 7.5 | 8.5 | 4.0 | 9.0 | 0 |
| Ethylene-vinyl acetate copolymer | 3.5 | 3.5 | 3.5 | 3.5 | 6.0 | 0 | 9.0 |
| Stearic acid | 0.2 | 0.2 | 0.2 | 0.2 | 0.2 | 0.2 | 0.2 |
| Carbon fiber | 2.0 | 2.0 | 2.0 | 2.0 | 2.0 | 2.0 | 2.0 |
| Degreasing method | (1) | (1) | (2) | (2) | (1) | (1) | (1) |
| Flexural strength* (N/mm²) | 31.2 | 32.3 | 70.5 | 80.4 | 19.6 | ** | 6.0 |
| HDT(°C) | 180 | 178 | >280 | >280 | 95 | ** | 50 |
| Coefficient of linear expansion (×10⁻⁷) | 100 | 100 | 50 | 48 | 179 | ** | 254 |

| | | | | | | | |
|---|---|---|---|---|---|---|---|
| * According to JIS K 7171 Bending test | | | | | | | |
| ** Cracks were formed during curing. | | | | | | | |

The results shown above reveal that all the formed articles of the present invention are superior in mechanical strength measured as flexural strength to those of Comparative Examples. Further, it is also shown that the formed articles of the present invention have higher deflection temperature under load and are superior in thermal resistance. Furthermore, the fact that those formed article have small coefficients of linear expansion shows that those formed articles are also superior in dimensional stability. On the other hand, the formed articles of the Comparative Examples are inferior in all of such properties to the formed articles of the present invention. In Comparative Example 3, cracks were formed during curing.

As described above, the thermoplastic hydraulic composition of the present invention can be injection molded without addition of water. When this composition is cured, general machine parts, OA machine parts and the like with excellent mechanical properties, thermal resistance, dimensional stability and processability can be produced.

By blending two types of thermoplastic resins differing in melting point and removing only a thermoplastic low molecular compound having a low melting point followed by curing, it is possible to promote the hydration reaction to the inside of formed articles and simultaneously to harden the formed articles while maintaining their shapes by the action of the remaining high molecular compounds having high melting points. In such a manner, machine parts excellent in mechanical characteristics, thermal resistance, dimensional stability or the like can be produced.

Furthermore, curing after complete removal of the thermoplastic resin at higher temperatures makes it possible to further improve such properties of formed articles.

## Claims

1. A thermoplastic hydraulic composition, **characterized by** comprising 100 parts by weight of two types of thermoplastic resins differing in melting point and from 500 to 1000 parts by weight of a hydraulic composition.

2. The thermoplastic hydraulic composition according to claim 1 further comprising at least one of from 1 to 200 parts by weight of a fiber and from 0.5 to 10.0 parts by weight of a releasing agent added.

3. The thermoplastic hydraulic composition according to claim 1 or 2, wherein the thermoplastic hydraulic composition is a mixed powder which comprises from 50 to 90 wt % of a hydraulic powder and from 10 to 50 wt % of a non-hydraulic powder having an average particle diameter of 1/10 that of the hydraulic powder or less.

4. The thermoplastic hydraulic composition according to any one of claims 1 to 3, wherein the hydraulic powder is at least one powder selected from portland cement, calcium silicate, calcium aluminate, calcium fluoroaluminate, calcium sulphoaluminate, calcium aluminoferrite, calcium phosphate, hemihydrate or anhydride gypsum and a powder of calcium oxide possessing a self-hardening property.

5. The thermoplastic hydraulic composition according to any one of claims 1 to 4, wherein the non-hydraulic powder is at least one powder selected from a calcium hydroxide powder, a dihydrate gypsum powder, a calcium carbonate powder, a slag powder, a flyash powder, a silica powder, a clay powder and a silica fume powder.

6. The thermoplastic hydraulic composition according to any one of claims 1 to 5, wherein the thermoplastic resin is constituted of from 50 to 90 wt% of a thermoplastic low molecular compound and 50 to 10 wt% of a thermoplastic high molecular compound.

7. The thermoplastic hydraulic composition according to claims 6, wherein the thermoplastic low molecular compound is selected from low melting point compounds of paraffin wax, montan wax, carnauba wax, a fatty acid eater, glycerite and modified wax.

8. The thermoplastic hydraulic composition according to claim 6 or 7, wherein the thermoplaatic high molecular compound is a single substance or a copolymer of two or more substances selected from polystyrene, an ethylene-vinyl acetate copolymer, an ethylene-ethyl acrylate copolymer, polypropylene, an acrylonitrile-butadiene-styrene copolymer, an acrylonitrile-styrene copolymer, methyl methacrylate, a vinyl chloride-vinyl chloride acetate copolymer, a vinyl chloride-vinyl acetate-maleic acid copolymer, a vinyl chloride-vinyl acetate copolymer, a vinyl chloride-vinylidene chloride copolymer, a vinyl chloride-acrylonitrile copolymer, an ethylene-vinyl chloride copolymer, a propylene-vinyl chloride copolymer, vinyl acetate, polyvinyl alcohol, polyamide, polyacetal, polyester, polycarbonate, polysulfone, polyether imide, polyamidoimide, and polyphenylene sulfide.

9. A hydration-hardened formed article **characterized by** being obtained by forming a thermoplastic hydraulic composition comprising 100 parts by weight of a thermoplastic resin and from 600 to 1000 parts by weight of a hydraulic composition into a given shape, subsequently removing the thermoplastic resin from the inside of the resulting formed article, and further introducing moisture into the formed article to harden it.

10. A hydration-hardened formed article **characterized by** being obtained by forming the hydraulic composition according to any one of claims 1 to 8 into a given shape, subsequently removing the thermoplastic resin from the resulting formed article completely or removing only a thermoplastic low molecular compound, and further introducing moisture into the inside of the formed article to harden it.

11. A method for producing a hydrogen-hardened formed article, the method being **characterized in that** it comprises forming a thermoplastic hydraulic composition comprising 100 parts by weight of a thermoplastic resin and from 500 to 1000 parts by weight of a hydraulic composition into a given shape to obtain an unhardened formed article, subsequently removing only a thermoplastic low molecular compound from the inside of the formed article by degreasing the unhardened formed article at a temperature not lower than the melting point of the thermoplastic low molecular compound, and then hydration-hardening the unhardened formed article by curing it to introduce moisture thereinto.

12. A method for producing a hydration-hardened formed article, the method being **characterized in that** it comprises forming the hydraulic composition according to any of claims 1 to 8 into a given shape to obtain an unhardened formed article, subsequently removing only a thermoplastic resin from the inside of the formed article by degreasing the unhardened formed article at a temperature not lower than the melting point of the thermoplastic high molecular compound, and then hydration-hardening the unhardened formed article by curing it to introduce moisture thereinto.

13. The method for producing a hydration-hardened formed article according to claim 11 or 12, wherein the degreasing step is carried out at a temperature of from 400 to 500°C for a period of 12 hours or longer.

14. A method for producing a hydration-hardened formed article, the method being **characterized in that** it comprises forming the hydraulic composition according to any of claims 1 to 8 into a given shape to obtain an unhardened formed article, subsequently removing only a thermoplastic low molecular compound from the inside of the formed article by degreasing the unhardened formed article at a temperature not lower than the melting point of the thermoplastic low molecular compound, and then hydration-hardening the unhardened formed article by curing it to introduce moisture thereinto.

15. The method for producing a hydration-hardened formed article according to claim 14, wherein the degreasing step is carried out at a temperature of 270°C or lower for a period of 12 hours or shorter.

16. The method for producing a hydration-hardened formed article according to any one of claims 11 to 15, wherein said curing step is carried out at a temperature of 80°C or higher by any one of normal pressure steam curing, high pressure steam curing and hot water curing, or in combination of the normal pressure steam curing and the hot water curing, or in combination of the high pressure steam curing and the hot water curing.

## Amended claims

### Amended claims under Art. 19.1 PCT

**1.** (Amended) A thermoplastic hydraulic composition that is formed into a given shape and then is hardened by removal of at least a part of a thermoplastic resin from the inside, followed by the introduction of moisture, which is **characterized by** comprising 100 parts by weight of two types of thermoplastic resins differing in melting point and from 500 to 1000 parts by weight of a hydraulic composition.

**2.** The thermoplastic hydraulic composition according to claim 1 further comprising at least one of from 1 to 200 parts by weight of a fiber and from 0.5 to 10.0 parts by weight of a releasing agent added.

**3.** (Amended) The thermoplastic hydraulic composition according to claim 1 or 2, wherein the hydraulic composition is a mixed powder comprising from 50 to 90 wt% of a hydraulic powder and from 10 to 50 wt% of a non-hydraulic powder.

**4.** The thermoplastic hydraulic composition according to any one of claims 1 to 3, wherein the hydraulic powder is at least one powder selected from portland cement, calcium silicate, calcium aluminate, calcium fluoroaluminate, calcium sulphoaluminate, calcium aluminoferrite, calcium phosphate, hemihydrate or anhydride gypsum and a powder of calcium oxide possessing a self-hardening property.

**5.** The thermoplastic hydraulic composition according to any one of claims 1 to 4, wherein the non-hydraulic powder is at least one powder selected from a potassium hydroxide powder, a dihydrate gypsum powder, a calcium carbonate powder, a slag powder, a flyash powder, a silica powder, a clay powder and a silica fume powder.

**6.** The thermoplastic hydraulic composition according to any one of claims 1 to 5, wherein the thermoplastic resin is constituted of from 50 to 90 wt% of a thermoplastic low molecular compound and 50 to 10 wt% of a thermoplastic high
